# EUROPÄISCHE PATENTSCHRIFT

(11) **EP 1 570 190 B1**
(45) Veröffentlichungstag und Bekanntmachung des Hinweises auf die Patenterteilung: **21.06.2006**
(21) Anmeldenummer: 03780081.0
(22) Anmeldetag: 28.11.2003
(51) Int. Cl.: F16D 65/38, F16D 65/14

(54) **SCHEIBENBREMSE MIT ELEKTROMOTORISCH BETÄTIGTER NACHSTELLVORRICHTUNG UND STEUERUNGSVERFAHREN**
DISK BRAKE COMPRISING AN ELECTROMOTIVELY ACTUATED ADJUSTING DEVICE, AND CONTROL METHOD
FREIN A DISQUE DOTE D'UN DISPOSITIF DE REGLAGE ACTIONNE PAR UN MOTEUR ELECTRIQUE ET PROCEDE DE COMMANDE

(30) Priorität: 02.12.2002 DE 10256426
(43) Veröffentlichungstag der Anmeldung: 07.09.2005
(73) Patentinhaber: KNORR-BREMSE SYSTEME FÜR NUTZFAHRZEUGE GMBH, 80809 München (DE)
(72) Erfinder: BAUMGARTNER, Johann, 85368 Moosburg (DE)
(74) Vertreter: Mattusch, Gundula
(86) Internationale Anmeldenummer: PCT/EP2003/013419
(87) Internationale Veröffentlichungsnummer: WO 2004/051112

(56) Entgegenhaltungen:
- WO-A-01/40672
- WO-A-02/14708
- US-A- 4 381 049
- US-A- 5 366 280

## Beschreibung

Die Erfindung betrifft eine Scheibenbremse nach dem Oberbegriff des Anspruchs 1 und ein Verfahren zur Steuerung dieser Scheibenbremse.

Eine derartige druckluftbetätigte Scheibenbremse ist aus der WO02/14708 bekannt. Die in dieser Schrift offenbarte Scheibenbremse weist einen Bremssattel auf, der eine Bremsscheibe umfasst. Sie verfügt ferner über eine im Bremssattel auf einer Seite der Bremsscheibe angeordnete Zuspannvorrichtung, insbesondere mit einem Drehhebel. Zum Ausgleich von Bremsbelagverschleiß sind jeweils zwei elektromotorisch angetriebene Nachstellvorrichtungen auf jeder Seite der Bremsscheibe vorgesehen. Je ein Elektromotor auf jeder Seite der Bremsscheibe treibt dabei als elektromotorischer Antrieb auf jeder Seite der Bremsscheibe gemeinsam die zwei Nachstellvorrichtungen an.

Der Bremssattel dieses Standes der Technik kann - wie auch der Bremssattel der vorliegenden Erfindung - als Fest-, Schwenk- und/oder Schiebesattel ausgebildet sein. Es sind auch Mischformen dieser Systeme denkbar und Lösungen, bei welchen sich der Bremssattel und/oder die Bremsscheibe um einen bestimmten Weg bei Zuspannungen der Bremse verformen kann/können.

Wird der Bremssattel als Festssattel ausgebildet, bietet es sich an, die Bremsscheibe als Schiebescheibe auszubilden, welche um den Betrag des Arbeitshubes der Bremse auf einer Radnabe verschieblich ist.

Bei druckluftbetätigten Scheibenbremsen wird die Feststell- und Hilfsbrems-Funktion bzw. - Bremse üblicherweise durch einen Federspeicherzylinder realisiert, der mit dem Betriebsbremszylinder zu einer Baueinheit, dem sogenannten Kombizylinder, zusammengefasst ist. Diese Systeme arbeiten sehr zuverlässig, ihr Nachteil ist der große benötigte Bauraum, das hohe Gewicht und die hohen Herstellkosten.

Es gibt daher auch Überlegungen, die Feststellbremsfunktion dadurch zu realisieren, dass über den Betriebsbremszylinder die Bremse betätigt wird und diese Bremsposition durch eine mechanische Verriegelung gehalten wird. Diese Verriegelung kann am Bremszylinder selbst, am Betätigungsstößel desselben oder auch an einem Betätigungselement der Zuspannvorrichtung der Bremse (z.B. ein Bremshebel) vorgenommen werden.

Ein Nachteil dieser Lösungen ist, daß keine abstufbare Bremswirkung erzielt werden kann. Es kann zwar die Feststellbremsfunktion an sich realisiert werden, weitergehende Anforderungen an die Hilfsbremsfunktion werden jedoch nicht erfüllt.
Andererseits bestehen Entwicklungen die mechanischen Verschleißnachstellsysteme von druckluftbetätigten Bremsen, insbesondere Scheibenbremsen, durch elektromotorisch betätigte und elektronisch geregelte Systeme zu ersetzen.

Ebenso gibt es bereits Lösungsvorschläge, die einen elektromotorischen Betätigungsmechanismus betreffen, der direkt oder über den Betriebsbremszylinder auf die Zuspannvorrichtung, insbesondere einen Drehhebel, einwirkt.

Ein Nachteil dieser Lösungen ist, dass durch das zusätzliche elektromotorische Betätigungssystem eine zusätzliche, aufwendige elektronische Steuerung notwendig ist.

Die Erfindung hat vor diesem Hintergrund die Aufgabe, auf kostengünstige und konstruktiv einfache Weise die Feststell- und/oder Hilfsbremsfunktion - hierunter sind auch Halterstellenbremsknkationen und dgl. zu verstehen - an einer pneumatisch betätigbaren Scheibenbremse zu realisieren.

Die Erfindung löst diese Aufgabe durch den Gegenstand des Anspruchs 1.

Danach ist die wenigstens eine elektromotorisch betätigte Nachstellvorrichtung derart ausgelegt, dass sie neben ihrer Nachtstellfunktion auch als Park- und/oder Hilfsbremse einsetzbar ist. Hierdurch wird das elektromotorisch betätigte bzw. elektromechanische Verschleißnachstellsystem in vorteilhafter und kostengünstiger Weise auch zur Realisierung der Feststell - und / oder Hilfsbremsfunktion genutzt.

Es ist lediglich notwendig, den oder die elektromotorischen Antrieb(e) der Nachstellvorrichtung(en) so auszulegen, daß er auch den Anforderungen an die Feststell - und / oder Hilfsbremsfunktion genügt.

Darüber hinaus muss nur eine Steuerungseinrichtung - ein Steuerungsrechner - welche die Nachstellvorrichtungen bzw. deren Motoren ansteuert, ergänzend auch dazu ausgelegt sein, eine geeignete Ansteuerung der elektromotorischen Nachstellvorrichtung zur Realisierung der Feststell- und/oder Hilfsbremse zu verwirklichen.

Da sowohl für die Nachstellvorrichtungen als auch für die Feststell- und/oder Hilfsbremsfunktion die gleichen mechanischen Elemente verwendet werden und Funktionen der elektronischen Steuerung gemeinsam nutzbar sind, kann die Feststell- und/oder Hilfsbremsfunktion quasi als "Zusatz" zur sowieso vorhandenen, elektromotorisch angetriebenen Nachtstellvorrichtung äußerst kostengünstig und dennoch zuverlässig wirkend realisiert werden.

Es wird also eine elektromotorische Feststell- und/oder Hilfsbremse (auch denkbar unter Einschluss der Haltestellenfunktion) realisiert, die nur einen sehr geringen Aufwand an Bauraum, Gewicht und Herstellkosten erfordert.

Insbesondere wird der elektromotorische Antrieb wenigstens einer der Nachstellvorrichtungen oder der wenigstens einen Nachstellvorrichtung so dimensioniert, dass er als Park- und/oder Hilfsbremse einsetzbar ist. Es kann sein, dass ein etwas leistungsfähigerer Elektromotor eingesetzt werden muss, als wenn die Nachstellvorrichtung nur zur Nachstellung an sich genutzt wird.

Vorteilhaft sind abgesehen von den Motoren auch die weiteren mechanischen Komponenten der Nachstellvorrichtung so dimensioniert, dass diese als Park- und/oder Hilfsbremse einsetzbar ist.

Darüber hinaus müssen auch elektrisch/elektronischen Baugruppen des Verschleißnachstellsystems zum Einsatz der Nachstellvorrichtungen als Park- und/oder Hilfsbremse ausgelegt sein.

Sind Nachstellvorrichtungen beidseits der Scheibenbremse angeordnet, bietet es sich an, nur eine davon zur Ausführung der Feststell - und/oder Hilfsbremsfunktion einzusetzen. Besonders vorteilhaft ist es, zur Realisierung der Feststell- und/oder Hilfsbremsfunktion eine Nachstellvorrichtung auf der Betätigungsseite der Bremse zu nutzen.

Konstruktiv bietet es sich an, wenn der Antriebsmotor im oder am oder insbesondere bauraumgünstig unter dem Bremsengehäuse bzw. -sattel aufgenommen wird und über ein Koppelungsgetriebe in das Übersetzungsgetriebe eingreift.

Die Erfindung schafft auch ein Verfahren zur Steuerung insbesondere der erfindungsgemäßen Scheibenbremsen. Danach wird die Park- und/oder Hilfsbremsfunktion unter Einsatz bzw. zumindest unter ergänzender Nutzung der elektromotorischen Nachstellvorrichtung realisiert. Die elektromotorische Nachstellvorrichtung realisiert diese Funktion entweder allein oder teilweise oder wird zumindest in irgendeiner Form zur oder bei der Realisierung dieser Funktion genutzt.

Vorzugsweise wird bei Scheibenbremsen mit beidseitiger Verschleißnachstellung die bei Einlegen der Feststell- und/oder Hilfsbremse nicht benötigte zweite Nachstellvorrichtung zur Reduzierung des Lüftspieles und damit zur Reduzierung des Anlegehubes der ersten Nachstellvorrichtung ebenfalls angesteuert.

Zur Verringerung des Leistungsbedarfes des elektromotorischen Antriebes bei Einlegen der Feststellbremse bietet es sich an, den Druck in den Betriebsbremszylindern (vorzugsweise auf das noch notwendige Maß) zu reduzieren.

Nach einer Variante werden zur Ermittlung des zum vorübergehenden Halten des Fahrzeuges notwendigen Druckes der Betriebsbremszylinder in einfacher Weise Informationen von Neigungssensoren und /oder andere im elektronischen Bremssystem vorhandene Informationen verwendet.

Vorzugsweise umfassen die Informationen Veränderungen des Ausgangssignals von Achslastsensoren beim Befahren von Steigungen und/oder gespeicherte Daten des vorhergehenden Anhaltevorganges an der Steigung, wie Bremsdruck oder erzielte Verzögerung. Anhand dieser Informationen wird dann die bestmögliche Ansteuerung ermittelt.

Zur Reduzierung des Leistungsbedarfes des elektromotorischen Antriebs der Nachstellvorrichtung zur Realisierung der Park- und/oder Hilfsbremse der Bremszylinderdruck bietet es sich an, wenn nur an einzelnen Rädern über eine elektronische Steuerungsvorrichtung z. B. achsweise oder radweise der Bremsdruck reduziert wird und nach dem Einlegen der Feststellbremse an diesem Rad bzw. den Rädern dieser Achse der Bremsdruck an diesen Rädern wieder angehoben und nacheinander auf diese Weise an den verschiedenen Achsen bzw. Rädern des Fahrzeuges die Feststellbremse eingelegt wird.

Es ist ferner zweckmäßig, wenn zur Steuerung der Feststell- und/oder Hilfsbremse bei dem in einem vom Fahrer betätigten Bedienelement oder mittels einer elektronischen Steuerungseinrichtung insbesondere mittels der Signale von Neigungs- und/oder Kraftsensoren auf einfache Weise ein elektrisches Sollwertsignal generiert wird und dieser Sollwert in der bremsenintegrierten Steuerung in einen Verstellweg der Nachstellspindeln umgesetzt wird, wobei dieser Verstellweg so bemessen wird, daß eine vorgegebene Aufspreizung des Bremssattels eingestellt wird, die der Spannkraft des Bremssattels entspricht, welche zur Erzielung des vorgegebenen Sollwertes erforderlich ist.

Nach einer weiteren Variante wird zur Steuerung der Feststell - und/oder Hilfsbremse bei Fahrzeugen die nur an einer Achse, z.B. der Vorderachse, mit einer integrierten elektromotorischen Feststell - und/oder Hilfsbremse ausgestattet und an der Triebachse mit herkömmlichen Federspeicherbremsen versehen sind, eine Sollwertvorgabe aus dem Signal eines Drucksensors gewonnen, der auf die Federspeicherbremsen wirkende Druck erfasst. Hierbei wird als Bedienelement vorzugsweise das übliche Handbremsventil beibehalten und der Sollwert für die elektromotorischen Betätigung aus dem Steuerdruck generiert.

Weitere vorteilhafte Ausgestaltungen zeigen die übrigen Unteransprüuche.

Nachfolgend wird die Erfindung anhand von Ausführungsbeispielen näher beschrieben. Es zeigen:

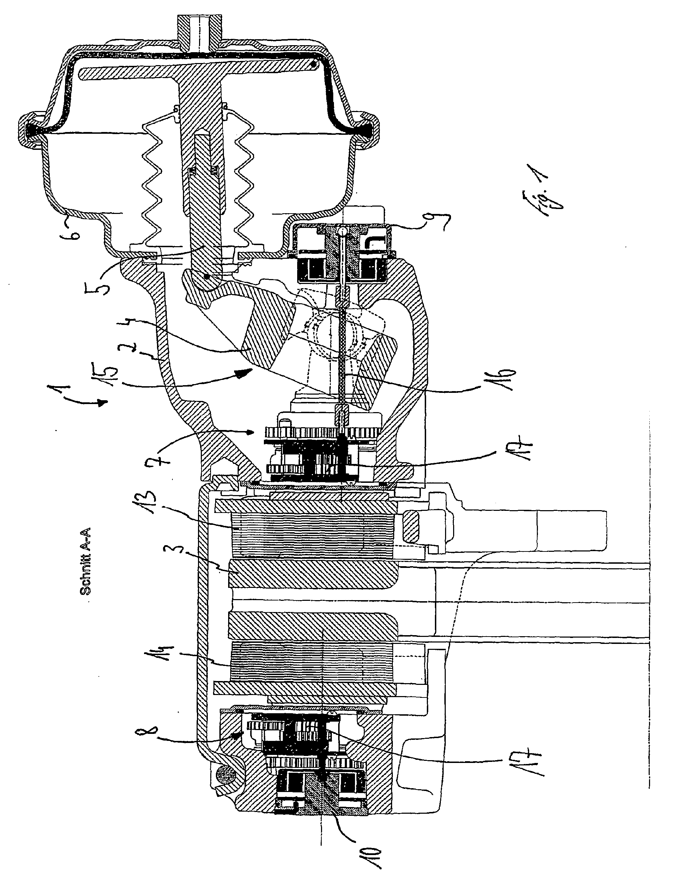

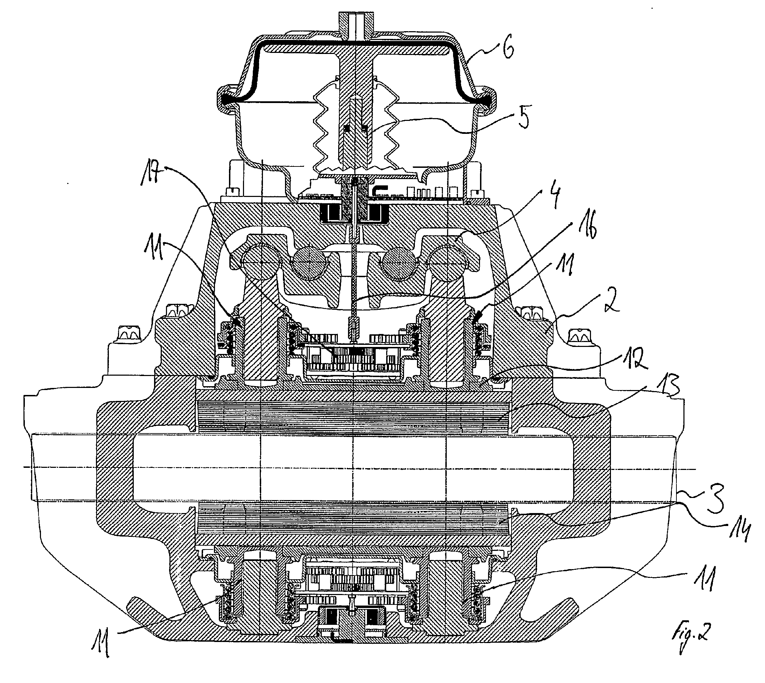

Figur 1 und 2 zwei zueinander senkrechte Schnitte durch eine Scheibenbremse.

Der Grundaufbau der Scheibenbremse kann dem in der PCT/EP01/09370 beschriebenen Aufbau entsprechen. Allerdings ist der Elektromotor so stark zu bemessen, dass er die zusätzlichen Anforderungen an die Park- und/oder Hilfsbremse und dgl. erfüllt.

Nach Fig. 1 und zwei weist die pneumatisch betätigte Scheibenbremse 1 einen Bremssattel 2 auf, der eine Bremsscheibe 3 an ihrem oberen Umfangsbereich einfasst. Es ist ferner im Bremssattel 2 zumindest auf einer Seite der Bremsscheibe eine Zuspannvorrichtung 15 angeordnet, insbesondere mit einem exzentrisch gelagerten Drehhebel 4, an dem der Betätigungsstößel 5 eines Bremszylinders 6 angreift. Fig. 1 zeigt beispielhaft einen Festsattel mit einer axial beweglichen Bremsscheibe 3 (nicht zu erkennen), so dass die Zuspannvorrichtung zunächst Druckstücke 12 (oder eine Druckstückplatte) mit einem ersten Bremsbelag 13 in Richtung der Bremsscheibe 3 und diese dann gegen den weiteren Bremsbelag 14 auf der anderen Seite der Bremsscheibe 3 drückt.

Während die Zuspannung pneumatisch erfolgt, sind zur Nachstellung vorzugsweise jeweils wenigstens eine (hier zwei) elektromotorisch angetriebene Nachstellvorrichtungen 7a,b und 8a,b auf jeder Seite der Bremsscheibe 3 vorgesehen.

Als Antrieb der jeweils zwei Nachstellvorrichtungen 7, 8 auf jeder Seite der Bremse dient vorzugsweise jeweils wenigstens ein Elektromotor 9,10, z.B. ein EC-Motor. Es ist auch denkbar, dass nur jeweils eine elektromotorisch angetriebene Nachstellvorrichtung 7, 8 auf jeder Seite der Bremsscheibe vorgesehen ist oder das nur eine einzige Nachstellvorrichtung auf einer Seite der Bremsscheibe 3 angeordnet wird (z.B. bei einem Schiebe- oder Schwenksattelkonzept, für das sich die Erfindung auch eignet). Die Elektromotoren sind hier am, insbesondere unter dem Bremssattel aufgenommen ist (alternativ sind sie auch in oder unter im anbringbar) und greifen über ein Kopplungsgetriebe 16 (hier nur auf der Zuspannseite) in das Übersetzungsgetriebe 17 der Nachstellvorrichtungen ein.

In der Praxis können bzw. werden die Elektromotoren etwas größer ausfallen als in der Darstellung der Fig. 1, um auch die Nachstellfunktion zu realisieren, denn sie dienen in diesem Fall ja nicht allein der Nachstellfunktion sondern auch zur Realisierung der Parkbremse und/oder Halterstellenbremse usw..

Alternativ können auch auf jeder Seite der Bremsscheibe zwei oder mehr Nachstellvorrichtungen 7, 8 ausgebildet sein.

Nach der Erfindung wird die elektromotorisch angetriebene Nachstellvorrichtung 7, 8 nicht zur Realisierung der Nachstellfunktion, also zum Ausgleich des Bremsbelagverschleiß genutzt sondern auch in irgendeiner Weise bei der Realisierung oder sogar ganz zur Realisierung der Feststell- und Hilfsbremsfunktion.

Alle Elemente des Betätigungsmechanismus der elektromotorischen Feststell - und Hilfsbremse sind in den elektromotorischen Verschleißnachstellvorrichtungen und/oder an den Scheibenbremsen bereits vorhanden. Dies sind :
- der elektromotorische Antrieb 9, 10;
- das Untersetzungs- - und Synchronisationsgetriebe 17 der Nachstellvorrichtungen 7, 8; und
- das Nachstellspindelsystem 11.

Darüber hinaus sind stets auch in einem separaten Steuergerät oder in einem Steuergerät an oder in der Scheibenbremse folgende Elemente vorhanden:
- Basiselemente der elektronischen Schaltung (Netzteil, EMV Schutz etc.);
- eine Leistungssteuerung des elektrischen Antriebes;
- eine Positionssteuerung des elektrischen Antriebes;
- eine Logikschaltung der elektronischen Hardware (Mikroprozessoren etc.);
- eine Basis- Steuerungssoftware (Überwachungsfunktionen für elektromotorischen Antrieb und Elektronik) etc.

Zur Realisierung der elektromotorischen Feststell - und Hilfsbremse mit Hilfe der Nachstellvorrichtungen mit elektromotorischem Antrieb muss lediglich die Dimensionierung des Elektromotors und des Getriebes und der Leistungselektronik an den höheren Leistungsbedarf der Feststell - und Hilfsbremse angepasst und die zusätzliche Software für die Ausführung der Feststell- und/oder Hilfsbremsfunktion integriert werden.

Über eine elektrische Leitung wird die Bremse mit Spannung und/oder Daten versorgt. Insbesondere wird sie an ein elektronisches Steuergerät (EBS-Steuergerät oder dgl. angeschlossen, dass die Steuerung der Scheibenbremsen übernimmt.

### Bezugszeichen

- Scheibenbremse: 1
- Bremssattel: 2
- Bremsscheibe: 3
- Drehhebel: 4
- Betätigungsstößel: 5
- Bremszylinders: 6
- Nachstellvorrichtung: 7, 8
- Elektromotor: 9, 10
- Nachstellspindelsystem: 11
- Druckstücke: 12
- Bremsbelag: 13
- Bremsbelag: 14
- Zuspannvorrichtung: 15
- Kopplungsgetriebe: 16
- Übersetzungsgetriebe: 17

## Patentansprüche

1. Pneumatisch betätigte Scheibenbremse mit
a) einem Bremssattel (2), der eine Bremsscheibe (3) umfasst;
b) wenigstens einer im Bremssattel auf einer Seite der Bremsscheibe angeordneten Zuspannvorrichtung (15) zum Zuspannen der Bremse, die vorzugsweise einen Drehhebel (4)aufweist;
c) wenigstens einer oder mehrerer Nachstellvorrichtung(en) (7, 8) zum Ausgleich von Bremsbelagverschleiß, die wenigstens einen elektromotorischen Antrieb (9,10) aufweist bzw. aufweisen;
**dadurch gekennzeichnet, dass**
d) die wenigstens eine elektromotorisch angetriebene Nachstellvorrichtung (7, 8) derart ausgelegt ist, dass sie als Park- und/oder Hilfsbremse einsetzbar ist,
e) der elektromotorische Antrieb - ein Elektromotor (9,10) - der Nachstellvorrichtung so dimensioniert ist, dass diese als Park- und/oder Hilfsbremse einsetzbar ist.

2. Scheibenbremse nach Anspruch 2, **dadurch gekennzeichnet, dass** die weiteren mechanischen Komponenten der Nachstellvorrichtung (7, 8) so dimensioniert sind, dass diese als Park- und/oder Hilfsbremse einsetzbar ist.

3. Scheibenbremse nach einem der vorstehenden Ansprüche, **dadurch gekennzeichnet, dass** elektrisch/elektronischen Elemente für die Nachstellvorrichtung(en) zur Verwendung der Nachstellvorrichtungen als Park- und/oder Hilfsbremse ausgelegt sind.

4. Scheibenbremse nach einem der vorstehenden Ansprüche, **dadurch gekennzeichnet, dass** wenigstens eine, vorzugsweise zwei der Nachstellvorrichtungen (7, 8) auf jeder Seite der Bremsscheibe (3) angeordnet sind.

5. Scheibenbremse nach Anspruch 4, **dadurch gekennzeichnet, dass** von den Nachstellvorrichtungen (7, 8) beidseits der Scheibenbremse nur eine zur Ausführung der Feststell- und/oder Hilfsbremsfunktion ausgelegt ist.

6. Scheibenbremse nach einem der vorstehenden Ansprüche, **dadurch gekennzeichnet, dass** zur Realisierung der Feststell- und/oder Hilfsbremsfunktion die Nachstellvorrichtung (7, 8) auf der Betätigungsseite der Bremse ausgelegt ist.

7. Scheibenbremse nach einem der vorstehenden Ansprüche, **dadurch gekennzeichnet, dass** der Elektromotor (9, 10) im oder am, insbesondere unter dem Bremssattel aufgenommen ist und über ein Koppelungsgetriebe (16, 17) in das Übersetzungsgetriebe eingreift.

8. Scheibenbremse nach einem der vorstehenden Ansprüche, **gekennzeichnet durch** eine Steuerungseinrichtung mit einem Steuerungsprogramm, dass zur Realisierung der Park- und/oder Hilfsbremsfunktion mittels wenigstens einer der Nachstellvorrichtungen ausgelegt ist.

9. Verfahren zur Steuerung einer pneumatisch betätigten Scheibenbremse nach einem der vorstehenden Ansprüche, **dadurch gekennzeichnet, dass** die Park- und/oder Hilfsbremsfunktion unter Einsatz der elektromotorischen Nachstellvorrichtung (7, 8) realisiert wird, wobei bei einem Betätigen der Feststellbremse der Druck im Betriebsbremszylinder zumindest vorübergehend reduziert wird.

10. Verfahren nach Anspruch 9, **dadurch gekennzeichnet, dass** zur Ermittlung des zum vorübergehenden Halten des Fahrzeuges notwendigen Druckes der Betriebsbremszylinder Informationen von Neigungssensoren und /oder andere im elektronischen Bremssystem vorhandene Informationen herangezogen werden.

11. Verfahren nach Anspruch 10, **dadurch gekennzeichnet, dass** die Informationen Veränderungen des Ausgangssignals von Achslastsensoren beim Befahren von Steigungen und/oder gespeicherte Daten des vorhergehenden Anhaltevorganges an der Steigung wie den Bremsdruck oder die erzielte Verzögerung umfassen.

12. Verfahren nach einem der vorstehenden Ansprüche 9 bis 11, **dadurch gekennzeichnet, dass** zur Reduzierung des Leistungsbedarfes des elektromotorischen Antriebs der Nachstellvorrichtung zur Realisierung der Park- und/oder Hilfsbremse der Bremszylinderdruck nur an einzelnen Rädern z. B. achsweise oder radweise reduziert wird und nach Einlegen der Feststellbremse an diesem Rad bzw. den Rädern dieser Achse der Bremsdruck an diesen Rädern wieder angehoben und nacheinander auf diese Weise an den verschiedenen Achsen bzw. Rädern des Fahrzeuges die Feststellbremse eingelegt wird.

13. Verfahren nach einem der vorstehenden Ansprüche 9 bis 12, **dadurch gekennzeichnet, dass** zur Steuerung der Feststell- und/oder Hilfsbremse von einem vom Fahrer betätigbaren Bedienelement oder mittels einer elektronischen Steuerungseinrichtung mittels der Signale von Neigungs- und/oder Kraftsensoren ein elektrisches Sollwertsignal generiert wird und dieser Sollwert in der bremsenintegrierten Steuerung in einen Verstellweg der Nachstellspindeln umgesetzt wird, wobei dieser Verstellweg so bemessen wird, dass eine vorgegebene Aufspreizung des Bremssattels eingestellt wird, die der Spannkraft des Bremssattels entspricht, welche zur Erzielung des vorgegebenen Sollwertes erforderlich ist.

14. Verfahren nach einem der vorstehenden Ansprüche 9 bis 13, **dadurch gekennzeichnet, dass** zur Steuerung der Feststell - und/oder Hilfsbremse bei Fahrzeugen die nur an einer Achse mit einer integrierten elektromotorischen Feststell- und/oder Hilfsbremse ausgestattet sind und an der Triebachse mit herkömmlichen Federspeicherbremsen, die Sollwertvorgabe aus dem Signal eines Drucksensors gewonnen wird, der den auf die Federspeicherbremsen wirkenden Druck erfasst.

15. Verfahren nach einem der vorstehenden Ansprüche 9 bis 14, **dadurch gekennzeichnet, dass** bei Scheibenbremsen mit beidseitiger Verschleißnachstellung die Feststell- und/oder Hilfsbremsfunktion nur auf einer Seite der Bremse, vorzugsweise der Betätigungsseite erzeugt wird

16. Verfahren nach einem der vorstehenden Ansprüche 9 bis 15, **dadurch gekennzeichnet, dass** bei Scheibenbremsen mit beidseitiger Verschleißnachstellung die bei Einlegen der Feststell- und/oder Hilfsbremse nicht benötigte zweite Nachstellvorrichtung zur Reduzierung des Lüftspieles und damit zur Reduzierung des Anlegehubes der ersten Nachstellvorrichtung ebenfalls angesteuert wird.

## Claims

1. Pneumatically actuated brake disc comprising
a) a brake caliper (2) incorporating a brake disc (3) ;
b) at least one application mechanism (15) disposed in the brake caliper on one side of the brake disc for applying the brake, which preferably has a rotating lever (4);
c) at least one or more adjustment mechanism(s) (7, 8) to compensate for wear on the brake lining, which has or have at least one electromotive drive (9, 10);
**characterised in that**
d) the at least one electromotively driven adjustment mechanism (7, 8) is configured so that it can be used as a parking and/or auxiliary brake,
e) the electromotive drive - an electric motor (9, 10) - of the adjustment mechanism is so dimensioned that it can be used as a parking and/or auxiliary brake.

2. Disc brake as claimed in claim 2, **characterised in that** the other mechanical components of the adjustment mechanism (7, 8) are so dimensioned that they can be used as a parking and/or auxiliary brake.

3. Disc brake as claimed in one of the preceding claims, **characterised in that** electric/electronic elements for the adjustment mechanism(s) is/are designed to permit use of the adjustment mechanisms as a parking and/or auxiliary brake.

4. Disc brake as claimed in one of the preceding claims, **characterised in that** at least one, preferably two of the adjustment mechanisms (7, 8) is provided on each side of the brake disc (3).

5. Disc brake as claimed in claim 4, **characterised in that** only one of the adjustment mechanisms (7, 8) on either side of the brake disc is designed to fulfil a parking and/or auxiliary brake function.

6. Disc brake as claimed in one of the preceding claims, **characterised in that**, in order to fulfil the parking and/or auxiliary brake function, the adjustment mechanism (7, 8) is disposed on the actuation side of the brake.

7. Disc brake as claimed in one of the preceding claims, **characterised in that** the electric motor (9, 10) is accommodated in or on, in particular underneath, the brake caliper and engages via a coupling gear (16, 17) in the transmission gearing.

8. Disc brake as claimed in one of the preceding claims, **characterised by** a control system with a control programme, which is configured to assume the parking and/or auxiliary brake function by means of at least one of the adjustment mechanisms.

9. Method of controlling a pneumatically actuated disc brake as claimed in one of the preceding claims, **characterised in that** the parking and/or auxiliary brake function is implemented using the electromotive adjustment mechanism (7, 8), whereby the pressure in the service brake cylinder is at least temporarily reduced when the parking brake is actuated.

10. Method as claimed in claim 9, **characterised in that** information from gradient sensors and/or other information available in the electronic brake system is applied as a means of determining the pressure of the service brake cylinder needed to halt the vehicle temporarily.

11. Method as claimed in claim 10, **characterised in that** the information comprises changes in the output signal of axle load sensors when travelling on gradients and/or stored data from the preceding stopping manoeuvre on the gradient and the brake pressure or deceleration achieved.

12. Method as claimed in one of the preceding claims 9 to 11, **characterised in that**, in order to reduce the power requirement of the electromotive drive of the adjustment mechanism to implement the parking and/or auxiliary brake, the brake cylinder pressure is reduced at individual wheels only, e.g. by axle or by wheel, and the pressure is raised again after the parking brake has been applied to this wheel or the wheels of this axle, and the parking brake is simply applied to the different axles or wheels of the vehicles one after the other.

13. Method as claimed in one of the preceding claims 9 to 12, **characterised in that**, in order to control the parking and/or auxiliary brake, an electric desired value signal is generated by a control element which can be operated by the driver or by means of an electronic control system by means of the signals from gradient and/or force sensors and this desired value is converted into a displacement path of the adjustment spindles in the control system integrated in the brake, and this displacement path is measured so that a predefined opening of the brake caliper is set which corresponds to the application force of the brake caliper needed to achieve the predefined desired value.

14. Method as claimed in one of the preceding claims 9 to 13, **characterised in that**, in order to control the parking and/or auxiliary brake in vehicles fitted with an integrated electromotive parking and/or auxiliary brake on only one axle and with conventional spring energy brakes on the driving axle, the desired value initial value is obtained from the signal of a pressure sensor which detects the pressure acting on the spring energy brakes.

15. Method as claimed in one of the preceding claims 9 to 14, **characterised in that**, in the case of disc brakes with wear adjustment on both sides of the disc brakes, the parking and/or auxiliary brake function is generated on only one side of the brake, preferably the actuation side.

16. Method as claimed in one of the preceding claims 9 to 15, **characterised in that**, in disc brakes with wear adjustment on both sides, the second adjustment device not needed to apply the parking and/or auxiliary brake is likewise activated as a means of reducing the air play and thus reducing the application stroke of the first adjustment device.

## Revendications

1. Frein à disque actionné de manière pneumatique comprenant
(a) un étrier de frein (2) renfermant un disque de frein (3) ;
(b) au moins un dispositif d'actionnement de frein (15) à actionner le frein, qui est disposé dans ledit étrier de frein d'un côté dudit disque de frein et présentant, de préférence, un levier rotatif (4) :
(c) au moins un ou plusieurs dispositifs de réglage (7, 8) à compenser l'usure sur les garnitures de frein, qui comprend ou respectivement comprennent un système d'entraînement par moteur électrique (9, 10) ;
**caractérisé en ce**
(d) que ledit au moins un dispositif de réglage entraîné par moteur électrique (7, 8) est conçu d'une telle manière, qu'il soit utilisable en tant que frein de stationnement et/ou auxiliaire, et
(e) en ce que l'entraînement par moteur électrique - un moteur électrique (9, 10) - dudit dispositif de réglage est dimensionné d'une telle manière, qu'il soit utilisable en tant que frein de stationnement et/ou auxiliaire.

2. Frein à disque selon la revendication 1, **caractérisé en ce que** les composants mécaniques supplémentaires dudit dispositif de réglage (7, 8) sont dimensionnés d'une telle manière, qu'il soient utilisables en tant que frein de stationnement et/ou auxiliaire.

3. Frein à disque selon une quelconque des revendications précédentes, **caractérisé en ce que** des éléments électriques/électroniques pour le(s) dispositif(s) de réglage sont conçus pour l'emploi desdits dispositifs de réglage en tant que frein de stationnement et/ou auxiliaire.

4. Frein à disque selon une quelconque des revendications précédentes, **caractérisé en ce qu'**au moins un, de préférence deux, desdits dispositifs de réglage (7, 8) est/sont disposé(s) de chaque côté du disque de frein (3).

5. Frein à disque selon la revendication 4, **caractérisé en ce que** seulement un desdits dispositifs de réglage (7, 8) des deux côtés du frein à disque est conçu pour la réalisation de la fonction de freinage d'immobilisation et/ou auxiliaire.

6. Frein à disque selon une quelconque des revendications précédentes, **caractérisé en ce que** ledit dispositif de réglage (7, 8) est conçu du côté d'actionnement du frein afin de réaliser la fonction de freinage d'immobilisation et/ou auxiliaire.

7. Frein à disque selon une quelconque des revendications précédentes, **caractérisé en ce que** ledit moteur électrique (9, 10) est accommodé dans ou au, en particulier sous, ledit étrier de frein et s'engrène dans le mécanisme de transmission via un engrenage de couplage.

8. Frein à disque selon une quelconque des revendications précédentes, **caractérisé par** un dispositif de commande à un programme de commande conçu pour la réalisation de la fonction de freinage de stationnement et/ou auxiliaire moyennant au moins un desdits dispositifs de réglage.

9. Procédé de commande d'un frein à disque actionné de manière pneumatique selon une quelconque des revendications précédentes, **caractérisé en ce que** ladite fonction de freinage d'immobilisation et/ou auxiliaire est réalisée par l'emploi dudit dispositif de réglage (7, 8) à moteur électrique, à la pression dans le cylindre de frein de service étant réduite au moins de manière transitoire en réponse à l'actionnement du frein d'immobilisation.

10. Procédé selon la revendication 9, **caractérisé en ce que** des informations des détecteurs de pente ascendante et/ou des autres informations disponibles dans le système de freinage électronique sont utilisés pour la détermination de la pression desdits cylindres de frein de service, qui est requise pour l'arrêt transitoire du véhicule.

11. Procédé selon la revendication 10, **caractérisé en ce que** les informations comprennent des variations du signal de sortie des détecteurs de charge par essieu au cas de passage sur des pentes ascendantes, et/ou des données de l'événement d'arrêt précédent aux pentes ascendantes, comme la pression de freinage ou le ralentissement achevé.

12. Procédé selon une quelconque des revendications précédentes 9 à 11, **caractérisé en ce que** la pression dans le cylindre de freinage n'est réduite qu'aux roues individuelles, par exemple par essieu ou par roue, afin de réduire la puissance nécessaire du système d'entraînement à moteur électrique du dispositif de réglage pour la réalisation du frein de stationnement et/ou auxiliaire, et **en ce qu'**après l'actionnement du frein d'immobilisation à cette roue ou respectivement aux roues de cet essieu, la pression de freinage est augmentée de nouveau et que, ce cette manière, le frein d'immobilisation est actionné en suite aux divers essieux ou respectivement roues du véhicule.

13. Procédé selon une quelconque des revendications précédentes 9 à 12, **caractérisé en ce que** pour la commande du frein d'immobilisation et/ou auxiliaire, un signal électrique à niveau de consigne est engendré par un élément d'actionnement commandable par le chauffeur ou moyennant un dispositif de commande électronique par l'emploi des signaux des détecteurs de pente ascendante et/ou de puissance, et **en ce que** cette valeur de consigne est convertie en une distance de réglage des broches de réglage dans le système intégré dans les freins, à cette distance de réglage étant dimensionnée d'une manière à régler un écartement prédéterminé de frein, qui correspond à la force élastique de l'étrier de frein, qui est requise afin d'achever la valeur de consigne prédéterminée.

14. Procédé selon une quelconque des revendications précédentes 9 à 13, **caractérisé en ce que** pour la commande du frein d'immobilisation et/ou auxiliaire aux véhicules équipés d'un frein d'immobilisation et/ou auxiliaire intégré électromoteur seulement à un seul essieu et à l'essieu d'entraînement aux freins à ressort accumulateur conventionnels, la valeur de consigne est produite par dérivation du signal d'un détecteur de pression qui détecte la pression agissant sur les freins à ressort accumulateur.

15. Procédé selon une quelconque des revendications précédentes 9 à 14, **caractérisé en ce qu'**au cas des freins à disque au compensation d'usure aux deux côtés, la fonction de freinage d'immobilisation et/ou auxiliaire n'est engendrée que d'un côté du frein, de préférence du côté d'actionnement.

16. Procédé selon une quelconque des revendications précédentes 9 à 15, **caractérisé en ce qu'**au cas des freins à disque au compensation d'usure aux deux côtés, le deuxième dispositif de réglage, qui n'est pas requis quand le frein d'immobilisation et/ou auxiliaire est actionné, est également commandé afin de réduire la marche d'aération et ainsi la course d'actionnement du premier dispositif de réglage.
